# EUROPEAN PATENT APPLICATION

(11) **EP 4 797 258 A1**
(43) Date of publication of application: **26.08.2026**
(21) Application number: 25812278.7
(22) Date of filing: 11.11.2025
(51) Int. Cl.: G10L 21/0272, G10L 25/78, G06F 3/16, G11B 27/02, G06F 18/24, G10L 21/0216, G10L 25/51, G06F 3/048

(54) **AUDIO SIGNAL PROCESSING APPARATUS AND METHOD**

(30) Priority: 06.01.2025 KR 20250001634 U; 14.01.2025 KR 20250005619; 15.01.2025 KR 20250006380; 07.02.2025 KR 20250015705
(71) Applicant: Samsung Electronics Co., Ltd., Suwon-si, Gyeonggi-do 16677 (KR)
(72) Inventor: YANG, Jaemo, Suwon-si, Gyeonggi-do 16677 (KR); KIM, Yeongkwan, Suwon-si, Gyeonggi-do 16677 (KR); MOON, Hangil, Suwon-si, Gyeonggi-do 16677 (KR); LEE, Moa, Suwon-si, Gyeonggi-do 16677 (KR); LEE, Jaeseong, Suwon-si, Gyeonggi-do 16677 (KR); CHOI, Jeonghwan, Suwon-si, Gyeonggi-do 16677 (KR)
(74) Representative: HGF
(86) International application number: PCT/KR2025/018450
(87) International publication number: WO 2026/146856

(57) **Abstract**

An audio signal processing apparatus includes at least one processor including processing circuitry, at least one memory storing instructions, and a display configured to output an audio editing interface for editing an audio input signal. The instructions, when executed by the at least one processor individually or collectively, cause the audio signal processing apparatus to detect one or more target object audio signals from the audio input signal using an object audio signal detection model that uses the audio input signal as an input, in response to the detection of the one or more target object audio signals, provide the audio editing interface through the display, obtain one or more target object audio signals separated from the audio input signal using an object audio signal separation model that uses the audio input signal as an input, and in response to receiving an audio editing request input from a user through the audio editing interface, generate an audio output signal by adjusting an audio signal level of the one or more separated target object audio signals.

## Description

### BACKGROUND

### 1. Field

The disclosure relates to an apparatus and method for audio signal processing.

### 2. Description of Related Art

An audio separation technology may refer to a technology of separating a plurality of sounds from a single audio signal (or an audio file). Source separation may be performed by applying a spectral analysis technology (e.g., spectrogram analysis of a sound source), a frequency analysis technology, or an energy analysis technology. The audio separation technology may be used in a variety of fields, for example, music production through vocal removal, audio restoration after noise removal, speech recognition separated from a background sound, and the like.

### SUMMARY

According to embodiments, an audio signal processing apparatus may include at least one processor including processing circuitry, at least one memory storing instructions, and a display outputting an audio editing interface for editing an audio input signal. The instructions, when executed by the at least one processor individually or collectively, may cause the audio signal processing apparatus to detect one or more target object audio signals from the audio input signal using an object audio signal detection model that uses the audio input signal as an input. The audio signal processing apparatus may, in response to the detection of the one or more target object audio signals, provide the audio editing interface through the display. The audio signal processing apparatus may obtain one or more target object audio signals separated from the audio input signal using an object audio signal separation model that uses the audio input signal as an input. The audio signal processing apparatus may, in response to receiving an audio editing request input from a user through the audio editing interface, generate an audio output signal by adjusting an audio signal level of the one or more separated target object audio signals.

According to embodiments, an audio signal processing method performed by an audio signal processing apparatus may include detecting one or more target object audio signals from an audio input signal using an object audio signal detection model that uses the audio input signal as an input. The audio signal processing method may include, in response to the detection of the one or more target object audio signals, providing an audio editing interface through a display. The audio signal processing method may include obtaining one or more target object audio signals separated from the audio input signal using an object audio signal separation model that uses the audio input signal as an input. The audio signal processing method may include, in response to receiving an audio editing request input from a user through the audio editing interface, generating an audio output signal by adjusting an audio signal level of the one or more separated target object audio signals.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an audio signal processing apparatus in a network environment according to an embodiment;
FIG. 2 is a schematic diagram illustrating detection and separation of an object audio signal by an audio signal processing apparatus according to an embodiment;
FIG. 3 is a flowchart illustrating an audio signal processing method according to an embodiment;
FIG. 4 is a flowchart illustrating detection of a target object audio signal using a classification-based model according to an embodiment;
FIG. 5 is a diagram illustrating detection of a target object audio signal using a classification-based model according to an embodiment;
FIG. 6 is a flowchart illustrating detection of a target object audio signal using a lightweight sound source separation model according to an embodiment;
FIG. 7 is a diagram illustrating detection of a target object audio signal using a lightweight sound source separation model according to an embodiment;
FIGS. 8A and 8B are diagrams illustrating an interface provided in an audio signal processing apparatus according to an embodiment;
FIG. 9 is a diagram illustrating an example in which an audio signal processing apparatus is used in an image according to an embodiment; and
FIG. 10 is a block diagram illustrating components of an audio signal processing apparatus according to an embodiment.

### DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, or similarly, the second component may be referred to as the first component.

It should be noted that if it is described that one component is "connected," "coupled," or "joined" to another component, a third component may be "connected," "coupled," and "joined" between the first and second components, although the first component may be directly connected, coupled, or joined to the second component.

The singular forms "a," "an," and "the" are intended to include the plural forms as well, unless the context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

As used in connection with the present disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

The term "unit" used herein may refer to a software or hardware component, such as a field-programmable gate array (FPGA) or an ASIC, and the "unit" performs predefined functions. However, "unit" is not limited to software or hardware. The "unit" may be configured to reside on an addressable storage medium or configured to operate one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." Furthermore, the components and "units" may be implemented to operate on one or more central processing units (CPUs) within a device or a security multimedia card. In addition, "unit" may include one or more processors.

Hereinafter, the embodiments will be described in detail with reference to the accompanying drawings. When describing the embodiments with reference to the accompanying drawings, like reference numerals refer to like elements and a repeated description related thereto will be omitted.

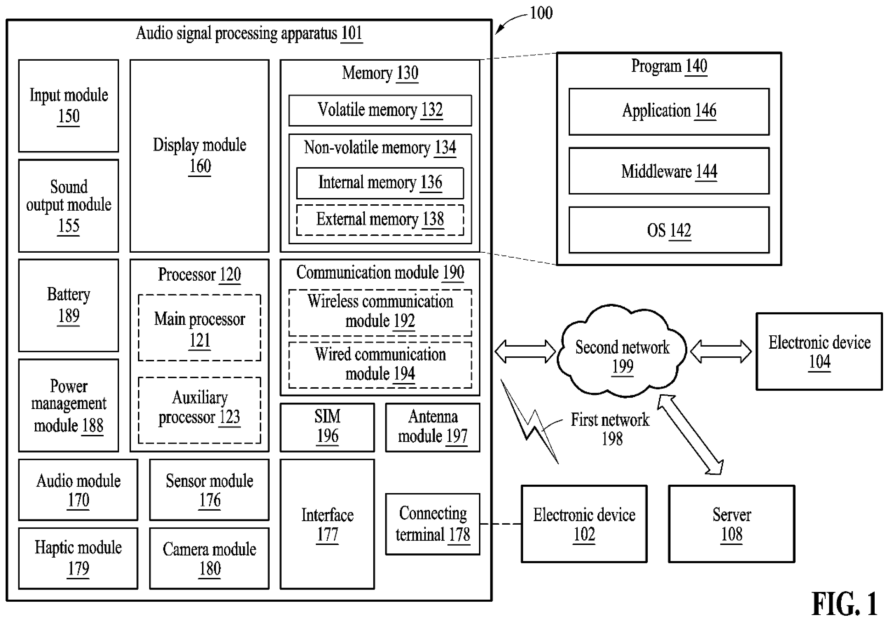

FIG. 1 is a block diagram illustrating an audio signal processing apparatus in a network environment according to an embodiment.

Referring to FIG. 1, an audio signal processing apparatus 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the audio signal processing apparatus 101 may communicate with the electronic device 104 via the server 108. According to an embodiment, the audio signal processing apparatus 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the audio signal processing apparatus 101, or one or more other components may be added in the audio signal processing apparatus 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the audio signal processing apparatus 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the audio signal processing apparatus 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the audio signal processing apparatus 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. An AI model may be generated through machine learning. Such learning may be performed by, for example, the audio signal processing apparatus 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the audio signal processing apparatus 101. The various pieces of data may include, for example, software (e.g., the program 140) and input data or output data for a command related thereto. The memory 130 may include the volatile memory 132 or the non-volatile memory 134. The memory 130 may be a non-transitory computer-readable storage medium that stores instructions. When executed by the processor 120, the instructions stored in the memory 130 may prompt at least one processor 120 to cause the audio signal processing apparatus 101 to perform an audio signal processing method. The non-transitory computer-readable storage medium may include read-only memory (ROM), programmable ROM (PROM), electrically erasable PROM (EEPROM), RAM, dynamic RAM (DRAM), static RAM (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, BLU-RAY or optical disk memory, a hard disk drive (HDD), a solid state drive (SSD), card memory (e.g., a multimedia card, a secure digital (SD) card, or an extreme digital (XD) card), magnetic tape, a floppy disk, a magneto-optical data storage device, an optical data storage device, a hard disk, a solid state disk, and other devices.

The program 140 may be stored as software in the memory 130 and may include, for example, an operating system (OS) 142, middleware 144, or an application 146.

The input module 150 may receive a command or data to be used by another component (e.g., the processor 120) of the audio signal processing apparatus 101, from the outside (e.g., a user) of the audio signal processing apparatus 101. The input module 150 may include, for example, a microphone, a mouse, a keyboard, a key (e.g., a button), or a digital pen (e.g., a stylus pen).

The sound output module 155 may output a sound signal to the outside of the audio signal processing apparatus 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the audio signal processing apparatus 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the audio signal processing apparatus 101.

The sensor module 176 may detect an operational state (e.g., power or temperature) of the audio signal processing apparatus 101 or an environmental state (e.g., a state of a user) external to the audio signal processing apparatus 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the audio signal processing apparatus 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the audio signal processing apparatus 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the audio signal processing apparatus 101. According to an embodiment, the power management module 188 may be implemented as, for example, at least a part of a power management integrated circuit (PMIC).

The battery 189 may supply power to at least one component of the audio signal processing apparatus 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the audio signal processing apparatus 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the audio signal processing apparatus 101 in a communication network, such as the first network 198 or the second network 199, using subscriber information (e.g., international mobile subscriber identity (IMSI)) stored in the SIM 196.

The wireless communication module 192 may support a 5G network after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the audio signal processing apparatus 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the audio signal processing apparatus 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the audio signal processing apparatus 101 and the external electronic device 104 via the server 108 coupled with the second network 199. Each of the external electronic devices 102 and 104 may be a device of a same type as, or a different type from, the audio signal processing apparatus 101. According to an embodiment, all or some of operations to be executed by the audio signal processing apparatus 101 may be executed at one or more external electronic devices (e.g., the external devices 102 and 104, and the server 108). For example, if the audio signal processing apparatus 101 needs to perform a function or a service automatically, or in response to a request from a user or another device, the audio signal processing apparatus 101, instead of, or in addition to, executing the function or the service, may request one or more external electronic devices to perform at least portion of the function or the service. The one or more external electronic devices receiving the request may perform the at least part of the function or the service requested, or an additional function or an additional service related to the request, and may transfer an outcome of the performing to the audio signal processing apparatus 101. The audio signal processing apparatus 101 may provide the outcome, with or without further processing of the outcome, as at least part of a reply to the request. To that end, a cloud computing, distributed computing, mobile edge computing (MEC), or client-server computing technology may be used, for example. The audio signal processing apparatus 101 may provide ultra low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The audio signal processing apparatus 101 may be applied to intelligent services (e.g., smart home, smart city, smart car, or healthcare) based on 5G communication technology or IoT-related technology.

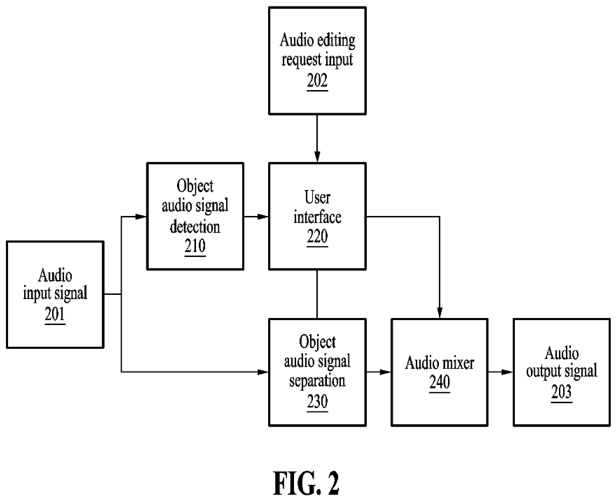

FIG. 2 is a schematic diagram illustrating detection and separation of an object audio signal by an audio signal processing apparatus according to an embodiment.

Referring to FIG. 2, an audio signal processing apparatus is an apparatus that edits an audio input signal 201 and outputs an audio output signal 203. The audio input signal 201 may represent voice data obtained through a microphone or obtained from a voice file. For example, the audio input signal 201 may represent an audio signal including a human voice and background music input through a microphone, or an audio signal including sounds of a plurality of instruments stored in a music file. However, the audio input signal 201 is not limited these and may include any singular or combination of sounds. The audio signal processing apparatus may have a two-step process to reduce the time used to edit the audio input signal 201. The first step is to detect an object audio signal included in the audio input signal 201. The object audio signal may represent a meaningful object sound source or a sound source of interest that is a target of individual editing in the audio input signal 201, but embodiments are not limited thereto. Object audio signal detection may be referred to in various ways, such as object audio signal scanning, object audio signal classification, and the like, and is not limited thereto. The second step is to separate the detected object audio signal from the audio input signal 201. "Separation" may be replaced with terms such as extraction or filtering, and is not limited thereto.

The audio signal processing apparatus may detect an object audio signal from the audio input signal 201, and provide information about the detected object audio signal through a user interface 220. The detected object audio signal may be separated in real time from the audio input signal 201 (e.g. as a soon as the respective target object audio signal has been detected), and may be edited (e.g., volume increased or other audio characteristics adjusted) by an audio editing request input 202 of a user through the user interface 220. Since there is no need to wait until all object audio signals included in the audio input signal 201 are detected according to the above process, the audio signal processing apparatus may reduce the waiting time for editing the object audio signals. Furthermore, the approach also means that it may not be necessary to wait for all target object audio signals to be separated before a user can view and/or edit a target object audio signal. In some examples, since the detection is performed separately to the separation and may be quicker than the separation, an output of the detection can be provided to a user whilst the separation of an object audio signal is still ongoing. In some examples, the separation may only be performed on sections of the audio input signal in which target object audio signals have been detected.

In other examples, the detection, which is generally a lower complexity operation than the separation, may be performed offline at the audio signal processing apparatus (e.g. using a local model) whereas the separation may be performed online (e.g. using server- or cloud-based model). Such an approach may allow the detection to be performed quickly whilst not significantly increasing resource consumption at the audio signal processing apparatus, and the more resource intensive separation offloaded to reduce resource consumption at the audio signal processing apparatus. Such an approach may be particularly advantageous for electronic devices that have resource limitations, including battery-powered devices such as smartphones.

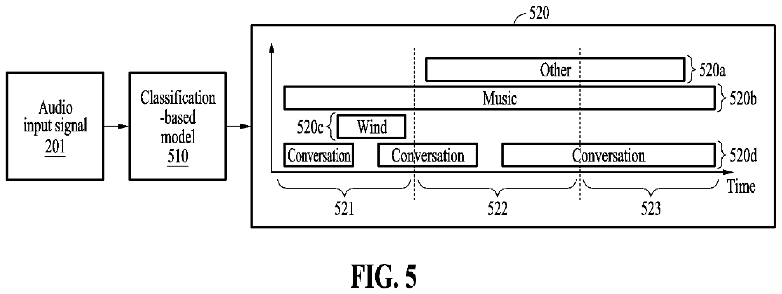

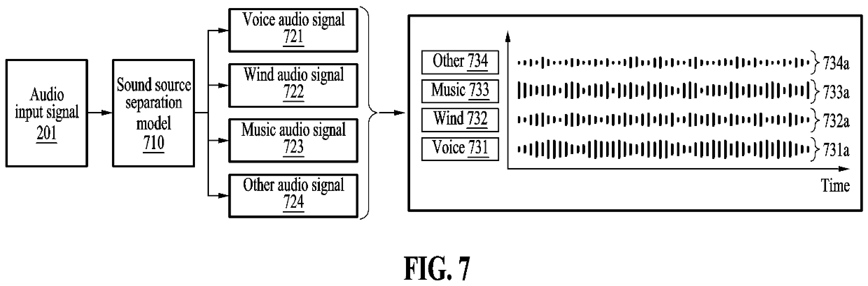

The audio signal processing apparatus may perform an object audio signal detection operation 210 on the audio input signal 201. The audio signal processing apparatus may detect one or more target object audio signals (e.g., human conversation sound and wind sound) from the audio input signal 201 using an object audio signal detection model that uses the audio input signal 201 as an input. The object audio signal detection model may be a classification-based model or a lightweight/reduced complexity sound source separation model (e.g., a sound source separation model 710 of FIG. 7). The object audio signal detection model will be described in more detail with reference to FIGS. 5 and 7.

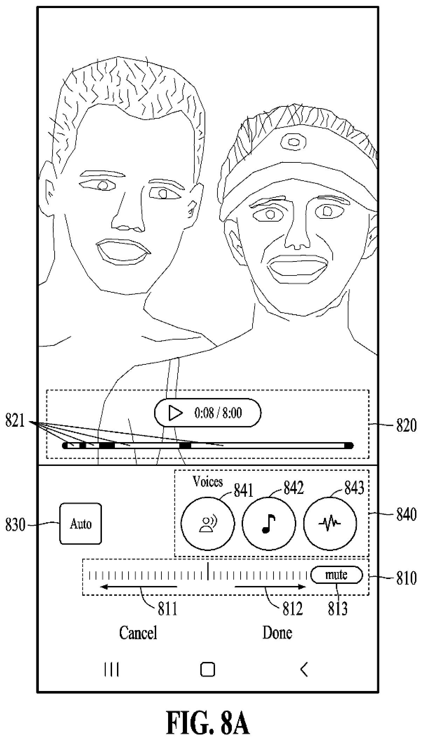

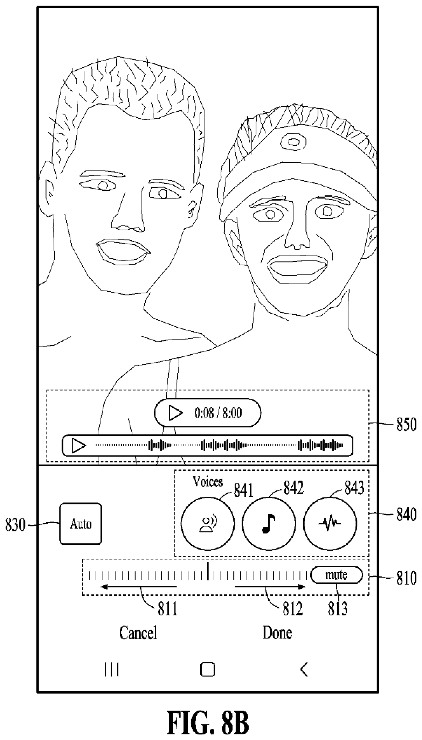

The audio signal processing apparatus may provide the user interface 220 for the detected target object audio signal. For example, the audio signal processing apparatus may provide an audio editing interface through a display in response to the detection of the one or more target object audio signals or in response to a user request to perform detection and/or separation of one or more target object audio signals on an audio input signal. The audio editing request input 202 of the user may be input through the audio editing interface. The audio editing request input 202 of the user may include a size adjustment request for an audio signal level of the detected target object audio signal (e.g. a volume adjustment). The audio editing request input 202 of the user may be input through an interface, or may be input through a text input or a voice signal input (e.g., "Adjust the volume of the song to 60% of the original volume"). The audio signal level may indicate a volume of an audio signal. The audio editing interface may provide information about the detected target object audio signal, and may include a volume level control interface for adjusting a size of a level of the detected target object audio signal. The audio editing interface will be described in more detail with reference to FIGS. 8A and 8B.

The audio signal processing apparatus may perform an operation of object audio signal separation 230 on the audio input signal 201. For example, the audio signal processing apparatus may obtain one or more target object audio signals separated from the audio input signal 201 by using a model of the object audio signal separation 230 that uses the audio input signal 201 as an input. In an embodiment, the audio signal processing apparatus may detect a target object audio signal from the audio input signal 201, and then obtain a separated target object audio signal in real time. For example, the audio signal processing apparatus may detect a target object audio signal from the audio input signal 201 input for each frame, and obtain a separated target object audio signal for each frame from the model of the object audio signal separation 230, thereby obtaining the separated target object audio signal for the entire frame in real time.

The audio signal processing apparatus according to an embodiment may generate the audio output signal 203 in response to receiving the audio editing request input 202 of the user through the user interface 220 (e.g., the audio editing interface). For example, the audio signal processing apparatus may generate the audio output signal 203 by adjusting the audio signal level of the separated one or more target object audio signals. The audio signal processing apparatus may generate an output signal using an audio mixer 240. The audio mixer is a device that mixes audio signals and outputs the mixed audio signal. The audio signal processing apparatus may obtain the audio output signal 203 from an audio mixer 240 that receives the audio input signal 201, the separated target object audio signal, and the audio editing request input 202 of the user. The audio output signal 203 may represent an audio signal in which the volume level of the target object audio signal is increased or decreased from the audio input signal 201.

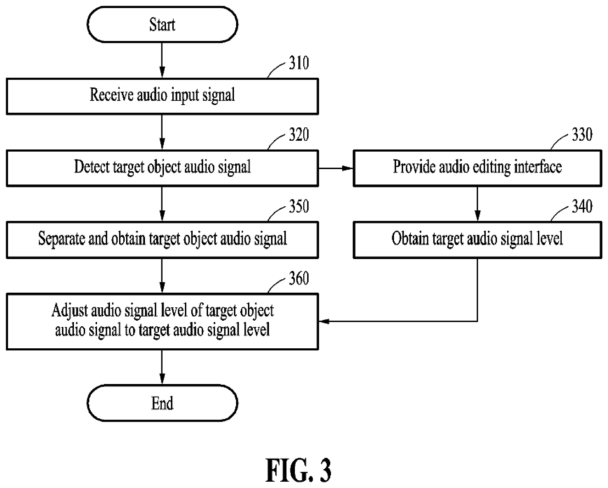

FIG. 3 is a flowchart illustrating an audio signal processing method according to an embodiment.

Operations of the audio signal processing method may be performed by an audio signal processing apparatus (e.g., the audio signal processing apparatus 101 of FIG. 1).

In operation 310, the audio signal processing apparatus may receive an audio input signal (e.g., the audio input signal 201 of FIG. 2). For example, the audio signal processing apparatus may receive an audio input signal that is a combination of a conversational voice of a plurality of people, background music, and noise through a microphone (not shown) connected through an input module (e.g., the input module 150 of FIG. 1).

In operation 320, the audio signal processing apparatus may detect a target object audio signal. The audio signal processing apparatus may detect one or more target object audio signals from an audio input signal using an object audio signal detection model. For example, the audio signal processing apparatus may input the audio input signal into the object audio signal detection model, and obtain an output value for a conversational voice, an output value for background music, and an output value for noise from the object audio signal detection model. The audio signal processing apparatus may determine whether to detect the conversational voice, the background music, and the noise from the audio input signal using each obtained value. The detection of the target object audio signal by the audio signal processing apparatus using the object audio signal detection model that uses the audio input signal as an input will be described in more detail with reference to FIGS. 5 and 7.

In operation 330, the audio signal processing apparatus may provide an audio editing interface. The audio editing interface may represent an interface for adjusting an audio signal level (or a sound volume) of the target object audio signal detected from the audio input signal. The audio signal processing apparatus may provide the audio editing interface through a display in response to the detection of the one or more target object audio signals. For example, when the audio signal processing apparatus detects the conversational voice, the background music, and the noise from the audio input signal, the audio signal processing apparatus may provide an interface for adjusting the sound volume of the conversational voice, an interface for adjusting the sound volume of the background music, and an interface for adjusting the sound volume of the noise. The interface may be presented in response to the initiation of the detection or in response to when a target object audio signal has actually been detected in the audio input signal. The audio editing interface may provide section information (e.g. which time section of the audio input signal the target object audio signal is in) for each of the detected conversational voice, background music, and noise, or may include a waveform interface that represents the detected sound as a waveform.

In operation 340, the audio signal processing apparatus may obtain a target audio signal level. The target audio signal level may represent an audio signal level requested by the user for the detected target object audio signal. For example, when the detected target object audio signal is noise, the user may request to mute the noise. In this case, the target audio signal level obtained by the audio signal processing apparatus may be 0%. If the detected target object audio signal is of interest to the user, the target audio signal level obtained by the audio signal processing apparatus may be 150% for example.

In operation 350, the audio signal processing apparatus may separate and obtain the target object audio signal. The audio signal processing apparatus may obtain the one or more target object audio signals separated from the audio input signal using an object audio signal separation model that uses the audio input signal as an input. For example, the audio signal processing apparatus may detect a conversational voice from an input frame, and then obtain a conversational voice separated from the audio input signal using the object audio signal separation model. The audio signal processing apparatus may detect noise in the input frame, and then obtain noise separated from the audio input signal using the object audio signal separation model.

When the target object audio signal is detected in the input frame, the audio signal processing apparatus may separate the detected target object audio signal from the audio input signal without waiting for determining whether another object audio signal is detected. The audio signal processing apparatus may perform an operation of separating the target object audio signal from the audio input signal through the above process in real time. The audio signal processing apparatus may reduce the waiting time that the user needs to wait to edit the target object audio signal by performing the operation of separating the target object audio signal in real time. For example, the audio signal processing apparatus may perform an operation of separating the target object audio signal from the audio input signal as and when a target object audio signal has been detected instead of waiting for detection to have been performed on the entire audio input signal. Furthermore, a user may specify the adjustment which they wish to make to a target object audio signal whilst the target object audio signal is still being separated, thus further reducing delays in allowing a user to make adjustment.

In operation 360, the audio signal processing apparatus may adjust the audio signal level of the target object audio signal to the target audio signal level. The audio signal processing apparatus may adjust the audio signal level of the separated one or more target object audio signals in response to receiving an audio editing request input from the user. The audio signal processing apparatus may adjust the audio signal level by adjusting a weight for the target object audio signal. The weight may represent a value within a defined range (e.g., a value greater than or equal to 0 and less than or equal to 2).

According to an embodiment, the user may individually adjust the audio signal level for the detected target object audio signal through a user interface (e.g., the user interface 220 of FIG. 2). For example, the detected target object audio signal may be a conversational voice, background music, and noise, and the audio signal processing apparatus may provide an audio editing interface for each of them. The user may adjust a weight for the conversational voice to 1.5 through the audio editing interface for the conversational voice, and adjust a weight for the noise to 0 through the audio editing interface for the noise, thereby individually adjusting the audio signal levels of the conversational voice and the noise.

The audio signal processing apparatus may adjust the audio signal level of each detected target object audio signal to a value set in advance (or a preset value) when the audio editing request input corresponds to an automatic adjustment request for adjusting the audio signal level of each target object audio signal separated from the audio input signal.

When the audio editing request input including the automatic adjustment request is input to the audio signal processing apparatus using a classification-based model according to an embodiment, the audio signal processing apparatus may adjust the audio signal level of each separated target object audio signal to a level defined for each. The adjustment of the audio signal level of each of the separated target object audio signals to the level defined for each may be referred to as a fixed preset or fixed preset mode. For example, when each of the separated target object audio signals is a conversational voice, background music, and noise, the audio signal processing apparatus using the classification-based model may adjust the volume of the conversational voice to 100%, the volume of the background music to 0%, and the volume of the noise to 0%.

When the audio editing request input including the automatic adjustment request is input to the audio signal processing apparatus using a lightweight sound source separation model according to an embodiment, the audio signal level of each of the separated target object audio signals may be adjusted to a level determined by a ratio of a magnitude of the target object audio signal to a magnitude of the audio input signal. The adjustment of the audio signal level of each of the separated target object audio signals to the level determined by the ratio of the magnitude of the target object audio signal to the magnitude of the audio input signal may be referred to as an adaptive preset, an adaptive preset mode, or a variable preset mode. The level determined by the ratio of the magnitude of the target object audio signal to the magnitude of the audio input signal may be defined by Expression 1. $10 {log}_{10} \frac{B}{A}$

In Expression 1, B represents the magnitude of the detected target object audio signal, and A represents the magnitude of the audio input signal. The unit of Expression 1 is dB.

The audio signal processing apparatus may determine a level according to the adaptive preset mode for each of one or more target object audio signals detected from an input audio signal. For example, when the separated target object audio signals are the conversational voice, the background music, and the noise, the level according to the preset mode for the conversational voice may be adjusted to 30 dB, the level according to the preset mode for the background music may be adjusted to 17 dB, and the level according to the preset mode for the noise may be adjusted to 0 dB.

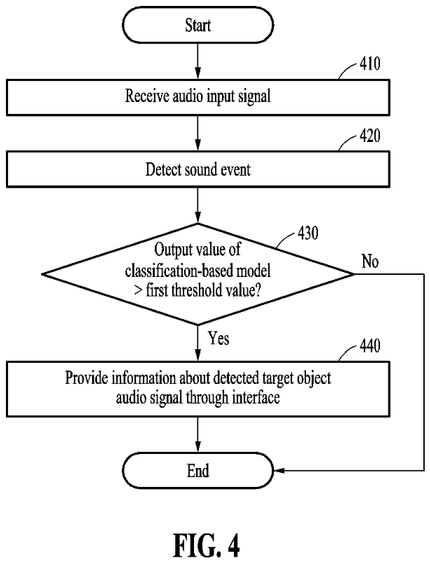

FIG. 4 is a flowchart illustrating detection of a target object audio signal using a classification-based model according to an embodiment.

Referring to FIG. 4, in operation 410, an audio signal processing apparatus (e.g., the audio signal processing apparatus 101 of FIG. 1) may receive an audio input signal. The receiving of the audio input signal by the audio signal processing apparatus has been described above in detail with reference to FIG. 3, a repeated description thereof is omitted.

In operation 420, the audio signal processing apparatus may detect a sound event using an object audio signal detection model. The object audio signal detection model may be a classification-based model that estimates whether a target object audio signal is detected from the audio input signal based on the sound event detection. The sound event detection may refer to identifying a specific sound (e.g., a conversational voice, noise, handclap sound, dog barking sound, etc.) in the audio input signal and detecting a time point at which the specific sound is generated and a duration thereof. The audio signal processing apparatus may estimate whether the target object audio signal is detected from the audio input signal using the classification-based model trained to detect the target object audio signal (e.g., the conversational voice, noise, and background music).

In operation 430, the audio signal processing apparatus may determine whether an output value of the classification-based model is greater than a first threshold value. When the output value for the target object audio signal obtained from the object audio signal detection model is greater than the first threshold value, the audio signal processing apparatus may determine that the target object audio signal is detected from the audio input signal. The output value for the target object audio signal may correspond to a probability value that the target object audio signal exists in the audio input signal. According to an embodiment, the first threshold value may be 0.75 and the output value may be 0.8. Since the output value of 0.8 is greater than the first threshold value of 0.75, the audio signal processing apparatus may determine that the conversational voice is detected. In an embodiment, the first threshold value may be 0.75, and the output value, when it is estimated that the audio signal processing apparatus detects the conversational voice from the classification-based model, may be 0.64. Since the output value of 0.64 is a value smaller than the first threshold value of 0.75, the audio signal processing apparatus may determine that the detected target object audio signal is not the conversational voice. The detection of the target object audio signals using the classification-based model will be described in detail with reference to FIG. 5.

In operation 440, the audio signal processing apparatus may provide information about the detected target object audio signal through an interface. For example, the audio signal processing apparatus may provide section information indicating a time section in which the detected one or more target object audio signals are detected from the audio input signal through an audio editing interface. The indicating of the section information by the audio interface through the interface will be described in detail with reference to FIG. 8A.

FIG. 5 is a diagram illustrating detection of a target object audio signal using a classification-based model according to an embodiment.

Referring to FIG. 5, an audio signal processing apparatus (e.g., the audio signal processing apparatus 101 of FIG. 1) may detect one or more target object audio signals using an object audio signal detection model that uses the audio input signal 201 as an input. The object audio signal detection model may be a classification-based model that estimates whether a target object audio signal is detected in the audio input signal 201 based on sound event detection.

A classification-based model 510 may classify the one or more target object audio signals by using a similarity and a distance relationship for pieces of object audio signal data included in the audio input signal 201. For example, the classification-based model 510 may be based on a deep neural network (DNN), a support vector machine (SVM), and/or a k-nearest neighbors (KNN) algorithm. The classification-based model 510 may detect a sound event using unique features of the target object audio signals (e.g., a voice, music, wind sound, siren sound, animal sound, and the like). The classification-based model 510 may detect the target object audio signal using a result of detecting the sound event, and classify the detected result. The classification-based model 510 may output one or more of the follwing: each target object audio signal estimated to have been detected using a result of classifying the target object audio signal, an output value (e.g., a probability value) for the estimated target object audio signal, and an occurrence time.

The audio signal processing apparatus may determine that one or more target object audio signals are detected using a classification-based object audio signal detection model that uses the audio input signal 201 as an input. When the output value for the target object audio signal obtained from the object audio signal detection model is greater than the first threshold value, the audio signal processing apparatus may determine that the target object audio signal is detected from the audio input signal 201. Since the determining that the target object audio signal is detected by the audio signal processing apparatus has been described in detail with reference to FIG. 4, a repeated description thereof is omitted.

The audio signal processing apparatus may determine whether one or more target object audio signals are detected for each frame using a result value obtained by a classification-based object audio signal detection model. A graph 520 shows sounds of a conversation 520d, wind 520c, music 520b, and others 520a detected in a first frame 521 section, a second frame 522 section, and a third frame 523 section. The audio signal processing apparatus may determine that the sounds of the music 520b, the wind 520c, and the conversation 520d are detected in the first frame 521 section, determine that the sounds of the conversation 520d, the music 520b, and the others 520a are detected in the second frame 522 section, and determine that the sounds of the conversation 520d, the music 520b, and the others 520a are detected in the third frame 523 section using values output from the classification-based model 510. When the target object audio signal is detected using the classification-based object audio signal detection model, the detection time may be reduced compared to when using a sound source separation model or a lightweight sound source separation model. The classification-based object audio signal detection model provides only rough information including information about the type of the detected target object audio signal and the section in which the target object audio signal exists. Therefore, the time used for detecting the target object audio signal may be reduced compared to the case using a sound source separation model or a lightweight sound source separation model. The frame duration may take any suitable value and may be configured to increase speed of the detection of the target object audio signal and/or accuracy of the detection of the target object audio signal. In some examples, it may be a frame length of a video if the audio input signal corresponds to a video.

The classification-based model 510 may be trained through a supervised learning method. The process of training the classification-based model 510 may include, for example, preprocessing training data, detecting a target object audio signal predicted from the classification-based model 510 using the preprocessed training data, and updating parameters of the classification-based model 510 using the detected target object audio signal.

The training data used in the classification-based model 510 may include training audio input signal and label data. The process of preprocessing the training data may include a normalization process of adjusting an amplitude of a training audio signal, a sampling process for the training audio signal, and a noise removal process. The sampling process for the training audio signal may refer to digitizing an input training audio source signal if the input training audio source signal is an analog signal. A data format of the input training audio signal may be converted into a data format (e.g., latent representation) that may be more effectively used by the object audio signal detection model through the preprocessing process.

The process of detecting the target object audio signal detected from the classification-based model 510 is a process of detecting the target object audio signal through a process of encoding and decoding the preprocessed training audio input signal. The classification-based model 510 may output the result of detecting the sound event through the process of encoding and decoding the training audio input signal.

The process of optimizing the classification-based model 510 may include a process of determining a loss (or a loss function) for a predicted value output from the classification-based model 510 and minimizing the determined loss. The process of minimizing the determined loss may include a process of determining a degree of contribution of each parameter of the classification-based model 510 to the loss by differentiating the loss function, and updating the parameters according to the degree of contribution. The updating of the parameter may be performed using gradient descent or a technique modified from the gradient descent. The classification-based model 510 may learn patterns from the training audio input signal through such a training process and have the ability to detect the target object audio signal from the new audio input signal 201.

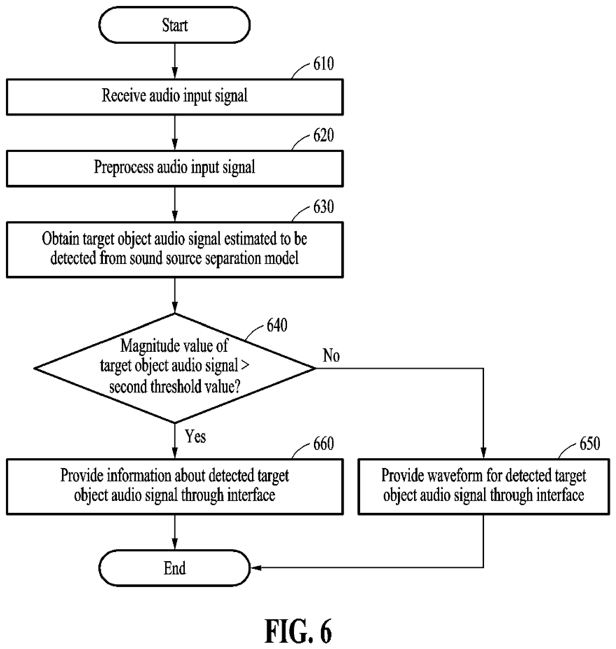

FIG. 6 is a flowchart illustrating detection of a target object audio signal using a sound source separation model according to an embodiment.

Referring to FIG. 6, in operation 610, an audio signal processing apparatus (e.g., the audio signal processing apparatus 101 of FIG. 1) may receive an audio input signal. The receiving of the audio input signal by the audio signal processing apparatus has been described above in detail with reference to FIG. 3, a repeated description thereof is omitted.

In operation 620, the audio signal processing apparatus may preprocess an audio input signal. For example, the audio signal processing apparatus may downsample an audio input signal as preprocessing. The downsampling may refer to reducing a data size of an audio input signal. The audio signal processing apparatus may reduce the data size of the audio input signal by performing downsampling, which in turn may increase a detection speed during the process of detecting the target object audio signal. The downsampling may be performed by passing the audio input signal through a digital filter (e.g., a low-pass filter) or by resampling the audio input signal. Although downsampling is referred to, any other preprocessing technique for increasing detection speed/reducing complexity when using a sound source separation model may be used such that the detection of a target object audio signal is quicker than the separation of target object audio signal. In some examples, in addition to or as alternative to preprocessing, a lightweight version a sound source separation model may be used for the detection of a target object audio signal.

In operation 630, the audio signal processing apparatus may obtain a target object audio signal estimated to have been detected from a lightweight sound source separation model. The sound source separation model may represent an object audio signal detection model that uses an audio input signal as an input, and uses one or more target object audio signals estimated to have been detected from the audio input signal as an output. The one or more target object audio signals estimated to have been detected which are output from the sound source separation model may represent a rough audio signal for the target object audio signal estimated to have been detected, rather than a target object audio signal separated from the audio input signal. The output of the rough audio signal for the target object audio signal estimated to have been detected, by the sound source separation model will be described in detail with reference to FIG. 7.

In operation 640, the audio signal processing apparatus may determine whether a magnitude value of the target object audio signal is greater than a second threshold value. The magnitude value of the audio signal may be expressed in decibels (dB). For example, the audio signal processing apparatus may determine whether the detected target object audio signal obtained from the sound source separation model is a sound exceeding 7 dB in magnitude. The audio signal processing apparatus may determine that the target object audio signal is detected from the audio input signal when the magnitude value of the audio signal of the target object audio signal is greater than the second threshold value (e.g., 7 dB). The audio signal processing apparatus may determine whether the magnitude of each audio signal of the detected target object audio signal is greater than the second threshold value. The audio signal processing apparatus may determine that each target object audio signal greater than the second threshold value is detected. The second threshold value (7 dB) is an example and is not limited thereto.

In operation 650, the audio signal processing apparatus may provide a waveform for the detected target object audio signal through an interface. For example, the audio signal processing apparatus may provide a waveform interface (e.g., a waveform interface 850 of FIG. 8B) that represents the detected target object audio signal through an audio editing interface as a waveform.

In operation 660, the audio signal processing apparatus may provide information about the detected target object audio signal through the interface. For example, the audio signal processing apparatus may provide a type (e.g., a sound source type interface 840 of FIG. 8B) of one or more target object audio signals detected from an audio input signal through the audio editing interface.

FIG. 7 is a diagram illustrating detection of a target object audio signal using a sound source separation model according to an embodiment.

Referring to FIG. 7, an audio signal processing apparatus (e.g., the audio signal processing apparatus 101 of FIG. 1) may detect one or more target object audio signals using an object audio signal detection model that uses the audio input signal 201 as an input. The object audio signal detection model may be the sound source separation model 710 that uses the audio input signal as an input, and outputs the one or more target object audio signals estimated to have been detected from the audio input signal, and the sound source separation model 710 may include a lightweight model of the object audio signal separation model. The lightweight model of the object audio signal separation model may have a structure identical to (or similar to) the structure (e.g., type and number of layers) of an object audio signal separation model used to separate an object audio signal detected from the audio input signal 201, and may represent a machine learning model that reduces the size of the object audio signal separation model (e.g., the number of parameters included in each layer). When the sound source separation model 710 (e.g. detection model) is the lightweight model of the object audio signal separation model (e.g. separation model), the data input to each of the sound source separation model 710 and the object audio signal separation model may be similar. For example, the data input to the sound source separation model 710 and the data input to the object audio signal separation model are of the same type, but the size of the data input to the sound source separation model 710 may be smaller than the size of the data input to the object audio signal separation model (e.g. by applying appropriate preprocessing as described above). Alternatively, the input data may be identical and the lightweight/reduced complexity nature of the sound source separation model leads to the increased speed by which target object audio signal can be detected compared to being separated. In some examples, preprocessed data may be used as an input to lightweight/reduced complexity sound source separation model 710 to perform detection in order to further reduce complexity and/or increase the speed of the detection. The layer structure and the type of the sound source separation model 710 may be similar to the layer structure and the type of the object audio signal separation model. For example, the type of the layer included in the sound source separation model 710 may be the same as the type of the layer included in the object audio signal separation model, but the number of layers included in each layer (e.g., the number of layers included in each hidden layer) may be different. The sound source separation model 710 may process data faster than the object audio signal separation model due to the weight reduction. In addition, when the sound source separation model 710 is used, the mismatch phenomenon may be reduced. The mismatch phenomenon may refer to a phenomenon in which a target object audio signal is detected in an object audio detection step but not separated in a target object audio signal separation step, or a phenomenon in which a target object audio signal is not detected in a detection step of a target object audio signal but is separated in the target object audio signal separation step. Since the sound source separation model 710 uses input data similar to that of the object audio signal separation model, and have similar structure and type of the included layer, an output value of the sound source separation model 710 may be similar to an output value of the object audio signal separation model. By training the sound source separation model 710 with the training target object audio signal that trains the object audio signal separation model, the sound source separation model 710 may output a value similar to the output value of the object audio signal separation model. The output value being similar may indicate that a difference between the output value of the object audio signal separation model and the output value of the sound source separation model 710 is reduced compared to the existing value. When the difference between the output value of the sound source separation model 710 and the output value of the object audio signal separation model is reduced, the mismatch phenomenon may be reduced. The sound source separation model 710 is not limited to a lightweight model of the object audio signal detection model, and may include other machine learning models capable of detecting a target object audio signal from the audio input signal 201.

The sound source separation model 710 may be a machine learning model based on a convolutional neural network (CNN), a recurrent neural network (RNN), or a convolutional recurrent neural network (CRNN), which is a hybrid model of the CNN and the RNN. The process of detecting the target object audio signal from the audio input signal 201 by the sound source separation model 710 may be similar to the process of classifying an object in an image. The sound source separation model 710 may include an input layer, a hidden layer, and an output layer. A dimension of data input through the input layer may be changed to a dimension of data that may be well used by the machine learning model. For example, when the audio input signal 201 is input, the audio input signal 201 may be converted into a spectrogram image (e.g., a spectrogram image having a size of 28 X 28) which is two-dimensional (2D) data, and the converted image data may be converted into a one-dimensional vector (e.g., a vector having 784 components in one dimension). The hidden layer may extract a feature for input data, and output a target object audio signal that is estimated to have been detected using the extracted feature. The hidden layer may include a plurality of layers for feature extraction, and each of the plurality of layers may include a plurality of nodes. Each node may correspond to a weight, and the corresponding weight may be optimized through a training process. The hidden layer may output the target object audio signal that is estimated to have been detected, through a fully connected layer in which an input node and an output node are fully connected. The output layer may provide the target object audio signal that is estimated to have been detected, using a result value received from the hidden layer. For example, the output layer may provide a reconstructed audio signal of the target object audio signal that is estimated to have been detected, and a rough waveform for the reconstructed audio signal. The object audio signal detection model may estimate whether the target object audio signal is detected from the input audio source signal through the above process.

The sound source separation model 710, into which the audio input signal 201 is input, may output one or more target object audio signals that are estimated to have been detected. For example, the sound source separation model 710 may output a voice audio signal 721, a wind audio signal 722, a music audio signal 723, an animal audio signal, and other audio signal 724 that are estimated to have been detected. The sound source separation model 710 may determine that the target object audio signal is detected when the magnitude of each audio signal is greater than the second threshold value. The second threshold value may vary in size for each target object audio signal that is estimated to have been detected. For example, the second threshold value for the voice audio signal 721 may be 15 dB, the second threshold value for the wind audio signal 722 may be 10 dB, the second threshold value for the music audio signal 723 may be 12 dB, the second threshold value for the animal audio signal may be 11 dB, and the second threshold value for the other audio signal 724 may be 7 dB. When the magnitude of the voice audio signal 721 is 17 dB, the magnitude of the wind audio signal 722 is 12 dB, the magnitude of the music audio signal 723 is 14 dB, the magnitude of the animal audio signal is 7 dB, and the magnitude of the other audio signal 724 is 9 dB, the sound source separation model 710 may estimate that the voice audio signal 721, the wind audio signal 722, the music audio signal 723, and the other audio signal 724 are detected. The sound source separation model 710 may provide the types of the one or more target object audio signals estimated to have been detected, and waveforms for the target object audio signals estimated to have been detected. For example, the sound source separation model 710 may provide a voice 731, wind 732, music 733, and other 734 as the types of the target object audio signals that are estimated to have been detected, and may provide a waveform 731a corresponding to the voice, a waveform 732a corresponding to the wind, a waveform 733a corresponding to the music, and a waveform 734a corresponding to the other.

The sound source separation model 710 may be trained using a supervised learning method similar to a training method for training a classification-based model. The process of training the sound source separation model 710 may include the process of preprocessing training data, detecting a target object audio signal predicted from the sound source separation model 710 using the preprocessed training data, and updating parameters of the sound source separation model 710 using the detected target object audio signal. The training data used in the sound source separation model 710 may include the training audio input signal and label data. The process of preprocessing the training data may include a normalization process of adjusting an amplitude of a training audio signal, a sampling process for the training audio signal, a process of visualizing the sampled training audio signal, and a noise removal process. The sampling process for the training audio signal may refer to digitizing an input training audio source signal if the input training audio source signal is an analog signal. The process of visualizing a sampled training audio signal may be represented as representing the audio signal information as a 2D image. For example, a Fourier transform (e.g., a fast Fourier transform) may be performed on the sampled audio signal to convert the input training audio signal into a 2D image representing frequency features. A data format of the input training audio signal may be converted into a data format (e.g., latent representation) that may be more effectively used by the object audio signal detection model through the preprocessing process.

The process of detecting the target object audio signal detected from the sound source separation model 710 is a process of detecting the target object audio signal through a process of encoding and decoding the preprocessed training audio input signal. Features may be extracted by encoding the training audio input signal, and a target object audio signal estimated to have been detected may be output by decoding using the extracted features.

The process of optimizing the sound source separation model 710 may include a process of determining a loss (or a loss function) for a predicted value output from the sound source separation model 710 and minimizing the determined loss. The process of minimizing the determined loss is the same as the process of minimizing the loss in the sound source separation model, and therefore, a repeated description is omitted. The sound source separation model 710 may learn patterns from the training audio input signal through such a training process and have the ability to detect the target object audio signal from the new audio input signal 201.

FIGS. 8A and 8B are diagrams illustrating an interface provided in an audio signal processing apparatus according to an embodiment. The interfaces of FIGS. 8A and 8B may be provided in response to a user request for target object audio signal detection, where the request may have been provided through a preceding user interface screen.

Referring to FIG. 8A, when the audio signal processing apparatus uses a classification-based object audio signal detection model, the audio signal processing apparatus may provide an audio editing interface for editing an audio input signal. The audio editing interface may include an interface 820 for providing section information indicating a section of the audio input signal in which the target object audio signal estimated to have been detected is detected, an interface 840 for indicating the detected one or more target object audio signals, an automatic adjustment interface 830 for automatically adjusting an audio signal level of the separated target object audio signal, and an interface 810 for a user to individually adjust an audio signal level size of the separated target object audio signal. The interface 820 for indicating the section information may provide information about a section 821 in which the detected target object audio signal is detected in the entire section of the audio input signal. The interface 840 for indicating the detected one or more target object audio signals may individually display each detected target object audio signal. For example, a conversational voice interface 841, a music interface 842, and a noise interface 843 may be displayed.

According to an embodiment, the user may adjust the audio signal level of the separated target object audio signals using a preset mode or individually. For example, when the user activates a fixed preset mode through the automatic adjustment interface 830, each audio signal level of the separated target object audio signal may be adjusted to a defined level. When the user wishes to individually adjust the separated target object audio signals, the user may select one of the conversational voice interface 841, the music interface 842, and the noise interface 843. The user may adjust the audio signal level of the target object audio signal by sliding a user input to the display in a first direction 811 or a second direction 812 on the interface 810 for individually adjusting the audio signal level size or by selecting a mute interface 813. The adjustment of the audio signal level has been described in detail with reference to FIG. 3, and therefore, a repeated description is omitted.

Referring to FIG. 8B, when using a lightweight sound source separation model, the audio signal processing apparatus may provide an audio editing interface for editing an audio input signal. Unlike when using the object audio detection model of the classification-based model, the audio signal processing apparatus may provide the waveform interface 850 for a target object detection audio signal when using the lightweight sound source separation model. The audio signal processing apparatus may roughly provide the waveform and size of the detected target object audio signal through the waveform interface 850. When the audio signal processing apparatus uses the lightweight sound source separation model, the user individually adjusting the detected target object audio signal is the same as described with reference to FIG. 8A, and therefore, a repeated description is omitted. According to an embodiment, the user may adjust the audio signal level of the separated target object audio signals using a preset mode or individually. For example, when the user activates a variable preset mode through the automatic adjustment interface 830, the audio signal processing apparatus may adjust the size of the audio signal level of each detected target object audio signal to a size determined by Expression 1. The size determined by Expression 1 may represent a size (level) determined by a ratio of the magnitude of the target object audio signal to the magnitude of the audio input signal.

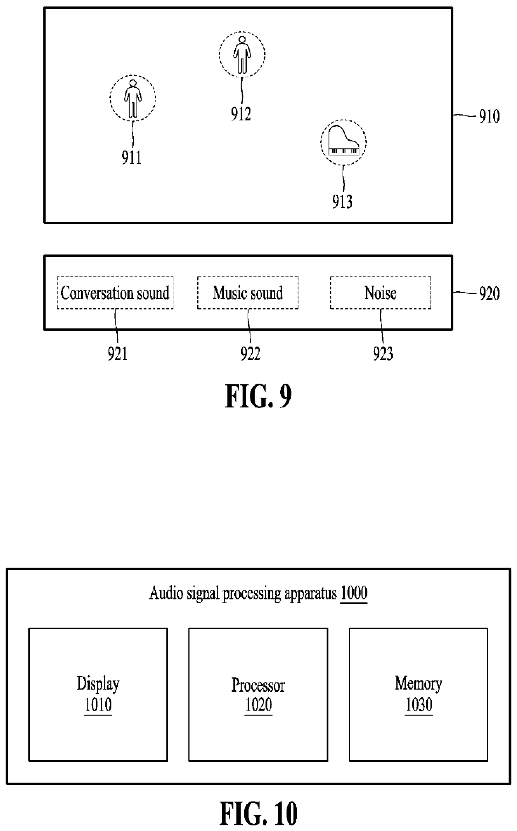

FIG. 9 is a diagram illustrating an example in which an audio signal processing apparatus is used in an image according to an embodiment.

Referring to FIG. 9, an audio signal processing apparatus (e.g., the audio signal processing apparatus 101 of FIG. 1) may be used to edit an audio signal included in an image 910, where the image 910 may be a still image, a frame of a video, or a video. According to an embodiment, when a user activates an adaptive preset mode through an automatic adjustment interface (e.g., the automatic adjustment interface 830 of FIG. 8A), the audio signal processing apparatus may adjust an audio signal level of the detected object audio signal 920 based on the correlation between objects included in the image 910 and the detected object audio signal 920. For example, the image 910 may include a first person 911, a second person 912, and a piano 913, and the object audio signal 920 included in the image 910 may include a conversation sound 921, a music sound 922, and noise 923. The noise 923 may include crowds roaring, ambient noise from a cafe, and train noise. The object audio signal 920 may further include wind sounds (not shown) and the like in addition to the conversation sound 921, the music sound 922, and the noise 923, but embodiments are not limited thereto.

The audio signal processing apparatus may estimate the correlation between an object detected in the image 910 and the object audio signal 920 detected in the audio signal using a machine learning model (e.g., a transformer model or a multimodal-based model). For example, the audio signal processing apparatus may estimate the correlation between the first person 911, the second person 912, and the piano 913 and the conversation sound 921, the music sound 922, and the noise 923. The audio signal processing apparatus may estimate that the first person 911, the second person 912, and the piano 913 and the conversation sound 921 and the music sound 922 have a high correlation, and estimate that the first person 911, the second person 912, and the piano 913 and the noise 923 have a low (or no) correlation. The audio signal processing apparatus may increase the audio signal level of the conversation sound 921 and the music sound 922 estimated to have a high correlation, and lower or mute the audio signal level of the noise 923 estimated to have a low (or no) correlation. For example, the audio signal processing apparatus may increase the audio signal level of the conversation sound 921 to 150% of the existing level, increase the audio signal level of the music sound 922 to 110% of the existing level, and lower the audio signal level of the noise 923 to 30% of the existing level. Accordingly, the relative volumes of target object audio signals can be adjusted based on the content of an image. For example, this may be useful in scenarios where a user has made an audio recording (e.g. of a concert) as well as having captured an image whilst making the recording. Such a scenario may also occur where a user has captured a video that includes an audio signal.

According to an embodiment, the user may individually adjust the level of each object audio signal 920 of the conversation sound 921, the music sound 922, and the noise 923 (e.g., siren sound). For example, the user may increase the audio signal level of the conversation sound 921 detected in the object audio signal 920 to 160% of the existing level, increase the audio signal level of the music sound 922 to 130% of the existing level, and lower the audio signal of the noise 923 to 0% of the existing level. The adjustment of the audio signal level by the user may be performed by adjusting the weight of each detected target object audio signal. The adjustment of the audio signal level through the weight adjustment has been described in detail with reference to FIG. 3, and therefore, a repeated description is omitted.

An audio editing device may be used to edit the object audio signal 920 included in the image 910 as described above, and therefore, when a smartphone, a tablet, a television (TV), a personal computer (PC), or visual reality (VR) is used, it may be used to edit the audio included in a content.

FIG. 10 is a block diagram illustrating components of an audio signal processing apparatus according to an embodiment.

Referring to FIG. 10, an audio signal processing apparatus 1000 may include a display 1010, a processor 1020, and a memory 1030. The audio signal processing apparatus 1000 may correspond to the audio signal processing apparatus 101 of FIG. 1.

The display 1010 may provide information visually. The display 1010 may correspond to or be included in the display module 160 of FIG. 1. The display 1010 may provide a user interface to provide information about the audio signal processing apparatus. Also, the display 1010 may include a touch sensor configured to detect a touch and a pressure sensor configured to detect pressure due to a touch to control the audio signal processing apparatus.

The memory 1030 may store instructions executable by the processor 1020. The memory 1030 may correspond to the memory 130 of FIG. 1. When executed by the processor 1020, the instructions executable by the processor 1020 may cause the processor 1020 to perform the audio signal processing method. The memory 1030 may be integrated with the processor 1020. For example, RAM or flash memory may be integrated with the processor 1020 such as an integrated circuit microprocessor. The memory 1030 may include a separate device, such as a storage device that may be used by an external disk drive, a storage array, or a database system. The memory 1030 and the processor 1020 may be operatively integrated or may communicate with each other via an input/output (I/O) port, a network connection, or the like so that the processor 1020 may read a file stored in the memory 1030.

The processor 1020 may execute the instructions stored in the memory 1030. The processor 1020 may correspond to the processor 120 of FIG. 1. The processor 1020 may include a CPU, a GPU, an NPU, an MPU, a DPU, a VPU, a video processor, an image processor, a display processor, a microprocessor, a processor core, a multi-core processor, an ASIC, an FPGA, or any combination thereof. When the instructions are executed by the processor 1020, the processor 1020 may control the audio signal processing apparatus 1000 to perform operations of the audio signal processing method described in the disclosure.

The audio signal processing apparatus 1000 may include at least one processor including processing circuitry, at least one memory storing instructions, and a display outputting an audio editing interface for editing an audio input signal. The audio signal processing apparatus 1000 may detect one or more target object audio signals from the audio input signal using an object audio signal detection model that uses the audio input signal as an input, in response to the detection of the one or more target object audio signals, provide the audio editing interface through the display, obtain one or more target object audio signals separated from the audio input signal using an object audio signal separation model that uses the audio input signal as an input, and in response to receiving an audio editing request input from a user through the audio editing interface, generate an audio output signal by adjusting an audio signal level of the one or more separated target object audio signals.

The audio signal processing apparatus 1000 may, when an output value for the target object audio signal obtained from the object audio signal detection model is greater than a first threshold value, determine that the target object audio signal is detected from the audio input signal, and the output value for the target object audio signal may correspond to a probability value that the target object audio signal exists in the audio input signal.

The audio signal processing apparatus 1000 may provide section information indicating a section in which the one or more detected target object audio signals are detected from the audio input signal through the audio editing interface.

The audio signal processing apparatus 1000 may, when the audio editing request input corresponds to an automatic adjustment request for adjusting the audio signal level of each of the target object audio signals separated from the audio input signal, adjust the audio signal level of each of the separated target object audio signals to a level defined for each.

The audio signal processing apparatus 1000 may, when a magnitude value of an audio signal of the target object audio signal obtained from a sound source separation model is greater than a second threshold value, determine that the target object audio signal is detected from the audio input signal.

The audio signal processing apparatus 1000 may provide a waveform interface that represents the detected target object audio signal as a waveform through the audio editing interface.

The audio signal processing apparatus 1000 may, when the audio editing request input is an automatic adjustment request for adjusting the audio signal level of each of the target object audio signals separated from the audio input signal, adjust the audio signal level of each of the separated target object audio signals to a level determined by a ratio of a magnitude of the target object audio signal to a magnitude of the audio input signal.

An audio signal processing apparatus 101; 1000 may include at least one processor 120; 1020 including processing circuitry, at least one memory 1030 storing instructions, and a display 1010 outputting an audio editing interface for editing an audio input signal 201. The instructions, when executed by the at least one processor 120; 1020 individually or collectively, cause the audio signal processing apparatus 101; 1000 to detect one or more target object audio signals from the audio input signal 201 using an object audio signal detection model that uses the audio input signal 201 as an input, in response to the detection of the one or more target object audio signals, provide the audio editing interface through the display 1010, obtain one or more target object audio signals separated from the audio input signal 201 using an object audio signal separation model that uses the audio input signal 201 as an input, and in response to receiving an audio editing request input 202 from a user through the audio editing interface, generate an audio output signal 203 by adjusting an audio signal level of the one or more separated target object audio signals.

The object audio signal detection model may be a classification-based model 510 that estimates whether the target object audio signal is detected in the audio input signal 201 based on sound event detection.

The instructions, when executed by the at least one processor 120; 1020 individually or collectively, may cause the audio signal processing apparatus 101; 1000 to, when an output value for the target object audio signal obtained from the object audio signal detection model is greater than a first threshold value, determine that the target object audio signal is detected from the audio input signal 201, and the output value for the target object audio signal may correspond to a probability value that the target object audio signal exists in the audio input signal 201.

The instructions, when executed by the at least one processor 120; 1020 individually or collectively, may cause the audio signal processing apparatus 101; 1000 to provide section information indicating a section in which the one or more detected target object audio signals are detected from the audio input signal 201 through the audio editing interface.

The instructions, when executed by the at least one processor 120; 1020 individually or collectively, may cause the audio signal processing apparatus 101; 1000 to, when the audio editing request input 202 corresponds to an automatic adjustment request for adjusting the audio signal level of each of the target object audio signals separated from the audio input signal 201, adjust the audio signal level of each of the separated target object audio signals to a level defined for each.

The object audio signal detection model may be a sound source separation model that uses the audio input signal 201 as an input, and uses the one or more target object audio signals estimated to have been detected from the audio input signal 201 as an output.

The object audio signal detection model may be a lightweight model of the object audio signal separation model.

The instructions, when executed by the at least one processor 120; 1020 individually or collectively, may cause the audio signal processing apparatus 101; 1000 to, when a magnitude value of an audio signal of the target object audio signal obtained from the sound source separation model is greater than a second threshold value, determine that the target object audio signal is detected from the audio input signal 201.

The instructions, when executed by the at least one processor 120; 1020 individually or collectively, may cause the audio signal processing apparatus 101; 1000 to provide a waveform interface 850 that represents the detected target object audio signal as a waveform through the audio editing interface.

The instructions, when executed by the at least one processor 120; 1020 individually or collectively, may cause the audio signal processing apparatus 101; 1000 to, when the audio editing request input 202 is an automatic adjustment request for adjusting the audio signal level of each of the target object audio signals separated from the audio input signal 201, adjust the audio signal level of each of the separated target object audio signals to a level determined by a ratio of a magnitude of the target object audio signal to a magnitude of the audio input signal 201.

The audio signal processing apparatus 101; 1000, wherein each target object audio signal is obtained in response to respective detection of each target object audio signal.

The audio signal processing apparatus 101; 100, wherein the audio editing interface is provided before all of the one or more target object audio signals have been separated from the audio input signal 201.

The audio signal processing apparatus 101; 1000, wherein the obtaining one or more target object audio signals separated from the audio input signal begins before the detecting one or more target object audio signals from the audio input signal 201 is complete.

The audio signal processing apparatus 101; 1000, wherein the audio input audio signal 201 includes a first target object audio signal and a second target object audio signal, and the obtaining of the first target object audio signal begins in response to detection of the first target object audio signal and before detection of the second target object audio signal.

The audio signal processing apparatus 101; 1000, wherein the obtaining one or more target object audio signals separated from the audio input signal 201 is performed only in sections of the audio input signal 201 in which the one or more target object audio signals have been detected.

An audio signal processing method performed by an audio signal processing apparatus 101; 1000 according to an embodiment may include detecting one or more target object audio signals from an audio input signal 201 using an object audio signal detection model that uses the audio input signal 201 as an input, in response to the detection of the one or more target object audio signals, providing an audio editing interface through a display 1010, obtaining one or more target object audio signals separated from the audio input signal 201 using an object audio signal separation model that uses the audio input signal 201 as an input, and in response to receiving an audio editing request input 202 from a user through the audio editing interface, generating an audio output signal 203 by adjusting an audio signal level of the one or more separated target object audio signals.

The audio signal processing method may include, when an output value for the target object audio signal obtained from the object audio signal detection model is greater than a first threshold value, determining that the target object audio signal is detected from the audio input signal 201. The output value for the target object audio signal may correspond to a probability value that the target object audio signal exists in the audio input signal 201.

The providing of the audio editing interface may include providing section information indicating a section in which the one or more detected target object audio signals are detected from the audio input signal 201 through the audio editing interface.

The generating of the audio output signal 203 may include, when the audio editing request input 202 corresponds to an automatic adjustment request for adjusting the audio signal level of each of the target object audio signals separated from the audio input signal 201, adjusting the audio signal level of each of the separated target object audio signals to a level defined for each.

The audio signal processing method may include, when a magnitude value of an audio signal of the target object audio signal obtained from the sound source separation model is greater than a second threshold value, determining that the target object audio signal is detected from the audio input signal 201.

The providing of the audio editing interface may include providing a waveform interface 850 that represents the detected target object audio signal as a waveform through the audio editing interface.

The generating of the audio output signal 203 may include, when the audio editing request input 202 is an automatic adjustment request for adjusting the audio signal level of each of the target object audio signals separated from the audio input signal 201, adjusting the audio signal level of each of the separated target object audio signals to a level determined by a ratio of a magnitude of the target object audio signal to a magnitude of the audio input signal 201.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as floptical disks; and hardware devices that are specifically configured to store and perform program instructions, such as ROM, random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. An audio signal processing apparatus (101; 1000), comprising:
at least one processor (120; 1020) including processing circuitry;
at least one memory (130; 1030) storing instructions; and
a display (1010) configured to output an audio editing interface for editing an audio input signal (201),
wherein the instructions, when executed by the at least one processor (120; 1020) individually or collectively, cause the audio signal processing apparatus (101; 1000) to:
detect one or more target object audio signals from the audio input signal (201) using an object audio signal detection model that uses the audio input signal (201) as an input;
in response to the detection of the one or more target object audio signals, provide the audio editing interface through the display (1010);
obtain one or more target object audio signals separated from the audio input signal (201) using an object audio signal separation model that uses the audio input signal (201) as an input; and
in response to receiving an audio editing request input (202) from a user through the audio editing interface, generate an audio output signal (203) by adjusting an audio signal level of the one or more separated target object audio signals.

2. The audio signal processing apparatus (101; 1000) of claim 1, wherein the object audio signal detection model is a classification-based model (510) that estimates whether the target object audio signal is detected in the audio input signal (201) based on sound event detection.

3. The audio signal processing apparatus (101; 1000) of claim 1 or 2, wherein
the instructions, when executed by the at least one processor (120; 1020) individually or collectively, cause the audio signal processing apparatus (101; 1000) to, when an output value for the target object audio signal obtained from the object audio signal detection model is greater than a first threshold value, determine that the target object audio signal is detected from the audio input signal (201), and
the output value for the target object audio signal corresponds to a probability value that the target object audio signal exists in the audio input signal (201).

4. The audio signal processing apparatus (101; 1000) of any one of claims 1 to 3, wherein the instructions, when executed by the at least one processor (120; 1020) individually or collectively, cause the audio signal processing apparatus (101; 1000) to:
provide, through the audio editing interface, section information indicating a section of the audio input signal in which the one or more detected target object audio signals are detected from the audio input signal (201).

5. The audio signal processing apparatus (101; 1000) of any one of claims 1 to 4, wherein the instructions, when executed by the at least one processor (120; 1020) individually or collectively, cause the audio signal processing apparatus (101; 1000) to:
when the audio editing request input (202) corresponds to an automatic adjustment request for adjusting the audio signal level of each of the target object audio signals separated from the audio input signal (201), adjust the audio signal level of each of the separated target object audio signals to a level defined for each.

6. The audio signal processing apparatus (101; 1000) of claim 1, wherein the object audio signal detection model is a sound source separation model (710) that uses the audio input signal (201) as an input, and uses the one or more target object audio signals estimated to be detected from the audio input signal (201) as an output.

7. The audio signal processing apparatus (101; 1000) of claim 6, wherein the object audio signal detection model is a lightweight model of the object audio signal separation model.

8. The audio signal processing apparatus (101; 1000) of claim 6 or 7, wherein the instructions, when executed by the at least one processor (120; 1020) individually or collectively, cause the audio signal processing apparatus (101; 1000) to:
when a magnitude value of an audio signal of the target object audio signal obtained from the sound source separation model (710) is greater than a second threshold value, determine that the target object audio signal is detected from the audio input signal (201).

9. The audio signal processing apparatus (101; 1000) of any one of claims 6 to 8, wherein the instructions, when executed by the at least one processor (120; 1020) individually or collectively, cause the audio signal processing apparatus (101; 1000) to:
provide, through the audio editing interface, a waveform interface (850) that represents the detected target object audio signal as a waveform.

10. The audio signal processing apparatus (101; 1000) of any one of claims 6 to 9, wherein the instructions, when executed by the at least one processor (120; 1020) individually or collectively, cause the audio signal processing apparatus (101; 1000) to:
when the audio editing request input (202) is an automatic adjustment request for adjusting the audio signal level of each of the target object audio signals separated from the audio input signal (201), adjust the audio signal level of each of the separated target object audio signals to a level determined by a ratio of a magnitude of the target object audio signal to a magnitude of the audio input signal (201).

11. The audio signal processing apparatus (101; 1000) of any preceding claim, wherein the audio editing interface is provided before all of the one or more target object audio signals have been separated from the audio input signal.

12. The audio signal processing apparatus (101; 1000) of any preceding claim, wherein the obtaining one or more target object audio signals separated from the audio input signal 201 begins before the detecting one or more target object audio signals from the audio input signal is complete.

13. The audio signal processing apparatus (101; 1000) of any preceding claim, wherein the audio input signal 201 includes a first target object audio signal and a second target object audio signal, and the obtaining of the first target object audio signal begins in response to detection of the first target object audio signal and before detection of the second target object audio signal.

14. The audio signal processing apparatus (101; 1000) of any preceding claim, wherein the obtaining one or more target object audio signals separated from the audio input signal is performed only in sections of the audio input signal in which the one or more target object audio signals have been detected.

15. An audio signal processing method performed by an audio signal processing apparatus (101; 1000), the method comprising:
detecting one or more target object audio signals from an audio input signal (201) using an object audio signal detection model that uses the audio input signal (201) as an input;
in response to the detection of the one or more target object audio signals, providing an audio editing interface through a display (1010);
obtaining one or more target object audio signals separated from the audio input signal (201) using an object audio signal separation model that uses the audio input signal (201) as an input; and
in response to receiving an audio editing request input (202) from a user through the audio editing interface, generating an audio output signal (203) by adjusting an audio signal level of the one or more separated target object audio signals.
